# EUROPÄISCHE PATENTSCHRIFT

(11) **EP 0 768 231 B1**
(45) Veröffentlichungstag und Bekanntmachung des Hinweises auf die Patenterteilung: **06.06.2001**
(21) Anmeldenummer: 96114425.0
(22) Anmeldetag: 10.09.1996
(51) Int. Cl.: B62D 33/067

(54) **Vordere Lagerung für das kippbare Fahrerhaus eines Frontlenker-Lastkraftwagen**
Front bearing for tilt cab for cab-over-engine lorries
Palier avant pour la cabine basculante d'un camion à cabine avancée

(30) Priorität: 10.10.1995 DE 19537722
(43) Veröffentlichungstag der Anmeldung: 16.04.1997
(73) Patentinhaber: MAN Nutzfahrzeuge Aktiengesellschaft, 80976 München (DE)
(72) Erfinder: Albertshofer, Günter, Dipl.-Ing. (FH), 81927 München (DE); Kozel, Peter, Dipl.-Ing., 85235 Odelzhausen (DE)

(56) Entgegenhaltungen:
- EP-A- 0 525 435
- DE-A- 2 229 436
- US-A- 4 053 178

## Beschreibung

Die Erfindung bezieht sich auf eine vordere Lagerung eines kippbaren Fahrerhauses eines Frontlenker-Lastkraftwagens gemäß dem Oberbegriff der Ansprüche 1 und 2.

Die Erfindung geht aus von einem Stand der Technik gemäß der DE 34 02 070 C2. Das dort offenbarte, kippbare Fahrerhaus eines Frontlenker-Lastkraftwagen ist um vordere Lager einer vorderen Lagerung in Bezug auf den Fahrzeugrahmen schwenkbar. Das mittels Schwingen mit dem Fahrzeugrahmen verbundene Fahrerhaus ist im Zusammenwirken mit weiteren Bauteilen, ohne Gefährdung für die Fahrerhausfederung, zwangsgeführt um diese vorderen Lager schwenkbar. Die durch das Kippen des Fahrerhauses bedingten Längs- und Querkräfte werden von dem Fahrerhaus über diese vorderen Lager auf den Fahrzeugrahmen übertragen. In umgekehrter Weise können im Betriebszustand des Frontlenker-Lastkraftwagens relativ starke Querschwingungen vom Fahrzeugrahmen über die weit vorne am Fahrzeugrahmen angeordneten, vorderen Lager auf das Fahrerhaus übertragen werden. Diese betriebsbedingten Querschwingungen können von dem Fahrer als störend empfunden werden und zudem die vordere Lagerung des kippbaren Fahrerhauses in ihrer Lebensdauer beeinträchtigen.

Aus der DE-A-2 229 436 ist eine vordere Lagerung eines vorzugsweise kippbaren Lastkraftwagen-Fahrerhauses bekannt, welches beidseitig über einen fahrerhausfesten Lagerbock mit einer rahmenfesten Konsole schwenkbar verbunden ist. Vom Lagerbock ist eine an sich bekannte hülsenförmige, nierenförmige Ausnehmungen aufweisende Gummifeder mit einer exzentrisch zur Außenhülse versetzt liegenden Innenhülse derart aufgenommen, daß durch die statische Fahrerhausvorlast die Gummifeder eine Mittellage einnimmt, bei der die nierenförmigen Ausnehmungen eine weitgehend symmetrische Gestalt annehmen und in einer horizontal gekrümmten Ebene liegen.

Es ist Aufgabe der Erfindung, die vom Fahrzeugrahmen auf ein kippbares Fahrerhaus übertragenen, betriebsbedingten Querschwingungen mit einfachen, technischen Mitteln erheblich zu reduzieren.

Diese Aufgabe wird erfindungsgemäß durch die Merkmale der Ansprüche 1 und 2 gelöst.

Gemäß Anspruch 1 ist erfindungsgemäß eine vordere Lagerung für ein um deren rahmenfeste vordere Lager schwenkbares Fahrerhaus eines Frontlenker-Lastkraftwagens gegeben, wobei das Fahrerhaus in Bezug auf eine Fahrzeuglängsachse querschwingungsmäßig von einem Fahrzeugrahmen durch im Bereich der vorderen Lagerung angeordnete Organe mit begrenzter Querbeweglichkeit entkoppelbar ist. In den vorderen Lagern einer vorderen Lagerung sind drehbare und axial verschiebbare Zapfen gelagert, die mit dem Fahrerhaus entweder unmittelbar oder mittelbar über hieran angelenkte Schwingen verbunden sind, wobei die axiale Verschiebbarkeit der Zapfen in den vorderen Lagern durch endseitig der Zapfen befestigte und zu den Stirnseiten der Lagerböcke hin abstützbar angeordnete Federelemente begrenzt ist.

Gemäß Anspruch 2 ist erfindungsgemäß eine vordere Lagerung für ein um deren rahmenfeste vordere Lager schwenkbares Fahrerhaus eines Frontlenker-Lastkraftwagens gegeben, wobei das Fahrerhaus in Bezug auf eine Fahrzeuglängsachse querschwingungsmäßig von einem Fahrzeugrahmen durch im Bereich der vorderen Lagerung angeordnete Organe begrenzter Querbeweglichkeit entkoppelbar ist. Dabei sind in hinteren Lagern einer vorderen Lagerung drehbare und axial verschiebbare Zapfen gelagert, die mit dem Fahrerhaus entweder unmittelbar oder mittelbar über hieran angelenkte Schwingen verbunden sind, wobei die axiale Verschiebbarkeit der Zapfen in den hinteren Lagern durch endseitig der Zapfen befestigte und zu den Stirnseiten der Schwingen oder den Stirnseiten einer mit dem Fahrerhaus fest verbundenen Fahrerhauskonsole hin abstützbar angeordnete Federelemente begrenzt ist.

Durch die erfindungsgemäße, in Bezug auf die Fahrzeuglängsachse querschwingungsmäßige Entkoppelung von Fahrerhaus und Fahrzeugrahmen können die im Bereich der vorderen Lagerung am Fahrzeugrahmen auftretenden, relativ starken Querschwingungen weitgehend vom Fahrerhaus isoliert werden. Als Querschwingungen zulassende Organe mit begrenzter Querbeweglichkeit können Bauteile wie beispielsweise Lagerböcke vorgesehen sein, die die Lager der vorderen Lagerung tragen. Dabei ist die begrenzte Querbeweglichkeit im Bereich der Befestigung des Lagerbockes am Fahrzeugrahmen, beispielsweise in Gestalt eines Querschwingungen zulassenden, entsprechend ausgestalteten Lagerbockfußes realisiert. Der Lagerbock kann in Querrichtung sandwichartig aus einem Verbund von Materialien unterschiedlicher Elastizität aufgebaut sein oder eine Querschwingungen zulassende Aufnahme für die Lager der vorderen Lagerung aufweisen. Diese Aufnahme kann beispielsweise den darin aufgenommenen Lagern eine axiale Verschiebbarkeit gestatten, deren axialer Verschiebeweg durch einen entsprechend ausgestalteten Anschlag mit Dämpfungseigenschaft begrenzt ist. Die querschwingungsmäßige Entkoppelung von Fahrerhaus und Fahrzeugrahmen im Bereich des Lagerbockes hat den Vorteil, daß alle in der Folge von Querschwingungen betroffenen Bauteile bereits von den besagten Querschwingungen isoliert und somit unbeeinträchtigt sind. Dadurch kann das Fahrerhaus während des Fahrzeugbetriebes, von diesen Querschwingungen nahezu unbeeinträchtigt, insgesamt schwingungsberuhigt gehalten und der Fahrkomfort optimiert werden. Zudem können die von Querschwingungen betroffenen Lager der vorderen Lagerung von ihrer bisherigen Zusatzaufgabe, diese Querschwingungen abzudämpfen bzw. aufzufangen, entlastet werden. Somit ist ebenfalls einer Erhöhung der Lebensdauer der Lager der vorderen Lagerung Rechnung getragen.

Die Lager können selbst aufgrund entsprechender Ausgestaltung eine axiale Verschiebbarkeit aufweisen oder derart in speziell konzipierten Aufnahmen angeordnet sein, daß diese eine axiale Verschiebbarkeit der Lager zulassen.

Die Lagerungen des Fahrerhauses können beispielsweise durch ein Paar axial verschiebbar konzipierter Gelenk-, Stirn- oder Gummilager realisiert sein. Die Begrenzung der Querbeweglichkeit kann durch axial zu den Lagern beabstandet angeordneter Mittel gegeben sein. Bei Verwendung von Stirnlagern ist als zusätzlicher Vorteil die geringere Lagerreibung gegeben. Lagerungen, bei denen das Fahrerhaus über Schwingen schwenkbar mit dem Fahrzeugrahmen verbunden sind, weisen zu einem vorderen Lagerpaar ein zusätzliches Paar hinterer Lager auf. Diese sind häufig als Gummilager realisiert und an einer fahrerhausfesten Fahrerhauskonsole angeordnet. Ist die erfindungsgemäße axiale Entkoppelung an den vorderen, in den Lagerböcken angeordneten Lagern vorgesehen, können die hinteren Gummilager von ihrer bisherigen Zusatzaufgabe, nämlich die vom Fahrzeugrahmen auf das Fahrerhaus übertragenen Querschwingungen abzudämpfen, entlastet werden. Dies hat eine Erhöhung der Lebensdauer der hinteren Lager zur Folge. Die axiale Entkoppelung kann sowohl an den vorderen als auch an den hinteren Lagern gleichermaßen vorgesehen sein. Bei axialer Entkoppelung beider Lagerpaare kann eine querschwingungsmäßige Entkoppelung von Fahrerhaus und Fahrzeugrahmen dadurch gegeben sein, daß durch genau aufeinander abgestimmte Querbeweglichkeit von vorderem zu hinterem Lagerpaar ein sich neutralisierender Verlauf der Querschwingungen ergibt.

Die in den vorderen Lagern der Lagerung drehbar gelagerten, mit dem Fahrerhaus in Verbindung stehenden Zapfen weisen eine axiale Verschiebbarkeit innerhalb der vorderen Lager auf. Die axiale Verschiebbarkeit der Zapfen ist durch endseitig dieser befestigter und zu den Stirnseiten der Lagerböcke hin abstützbar angeordneter Federelemente begrenzt. Infolge des axialen Freiheitsgrades der vorderen Lager können die in ihnen gelagerten Zapfen in kleinen, tolerierbaren Amplitudenbereichen axial schwingen und so die unerwünschte, direkte Übertragung der Querschwingungen vom Fahrzeugrahmen auf das Fahrerhaus unterbinden. Die Federelemente begrenzen die axiale Verschiebbarkeit der Zapfen in den Lagern und gewährleisten ein weiches Abfangen der quer zur Fahrzeugrichtung verlaufenden Schwingungsbewegung. Die beispielsweise als Gelenklager realisierten vorderen Lager lassen somit neben Drehbewegungen und kardanischen Auslenkungen zusätzlich auch axiale Verschiebungen des Zapfens im Lager zu, ohne die bekannten Eigenschaften einer Fahrerhauslagerung zu beeinträchtigen.

Gemäß einer Weiterbildung der Erfindung können die vorderen Lager mit ihren Lageraußenringen innerhalb lagerbockinterner Nuten angeordnet und axial fixiert sein. Mit ihren Lagerinnenringen können die vorderen Lager axial verschiebbar auf fest auf den Zapfen aufsitzenden Gleitbuchsen angeordnet sein. Eine am Innendurchmesser des Lagerinnenringes vorgesehene Gleitschicht ermöglicht der fest mit dem Zapfen verbundenen Gleitbuchse in einem kleinen Amplitudenbereich axial zu schwingen.

Nach einer Weiterbildung der Erfindung können an den vorderen Lagern stirnseitig Abdichtungen vorgesehen sein. Dadurch ist sichergestellt, daß beispielsweise bei Vorsehen von Gleit- oder Gelenklagern an deren fein bearbeiteten Gleitflächen keine Korrosion auftritt. Die Abdichtungen können balgähnliche Dichtelemente sein, die einenendes zwischen den Lageraußenringen und den lagerbockfesten Schultern und anderenendes zwischen den Lagerinnenringen und den gleitbuchsenfesten Schultern gefaßt sind.

Die lagerbockfesten Schultern können durch die Flanken der lagerbockinternen Nuten und die gleitbuchsenfesten Schultern durch stimendseitig der Gleitbuchsen angeordnete Stege gebildet sein. Dabei können die Schultern separate, einlegbare Schulterringe oder einstückige, gemeinsam mit den Gleitbuchsen bzw. mit dem Lagerbock gebildete Bauteile sein.

Gemäß einer weiteren Ausgestaltung der Erfindung können die hinteren Lager mit ihren Lageraußenringen innerhalb der Schwingen oder innerhalb der Fahrerhauskonsole angeordneter Nuten axial fixiert und mit ihren Lagerinnenringen axial verschiebbar auf fest auf den Zapfen aufsitzenden Gleitbuchsen angeordnet sein.

Gemäß einer weiteren Ausgestaltung der Erfindung können an den hinteren Lagern stirnseitig Abdichtungen vorgesehen sein. Die Abdichtungen können balgähnliche Dichtelemente sein, die einenendes zwischen den Lageraußenringen und schwingen- oder konsolenfesten Schultern und anderenendes zwischen Lagerinnenringen und gleitbuchsenfesten Schultern gefaßt sind. Die schwingen- oder konsolenfesten Schultern können durch die Flanken der schwingen- oder konsoleninternen Nuten und die gleitbuchsenfesten Schultern durch stirnendseitig der Gleitbuchsen angeordnete Stege gebildet sein.

In weiterer Ausgestaltung der Erfindung können den Dichtelementen zusätzlich Druckfedern zugeordnet sein, die sich einenendes an den Lagerinnenringen und anderenendes über die Dichtelemente an den Stegen der Gleitbuchsen abstützen. Durch die Druckfedern sind die Dichtelemente in ihrem Dichtbereich axial an die jeweiligen Stege der Gleitbuchsen angepreßt, so daß bei den auftretenden Axialbewegungen zwischen Lagern und Gleitbuchsen ein Abheben der Dichtkanten der Dichtelemente wirksam unterbunden ist. Die Druckfedern sind so ausgelegt, daß sie einerseits durch ihre lineare Kennlinie eine stets genügend große Anpreßkraft und andererseits bei weiterer Verformung eine nicht zu hohe Beeinflussung der axialen Bewegung der Gleitbuchse und damit des Zapfens im Lager gewährleisten.

Nach einer Weiterbildung der Erfindung können die Federelemente tellerförmig ausgebildet sein und abstützseitig Dämpfungselemente aufweisen. Die Dämpfungselemente können dabei ringförmige Gummipuffer oder dergleichen sein, die - mit den Federelementen verbunden - Federdämpfungseinheiten zur Begrenzung der axial in den Lagern verschiebbaren, mit den Zapfen verbundenen Gelenkbuchsen bilden. Der Abstand zwischen den sich an den Lagerböcken abstützenden Federelemente ist so bemessen, daß je nach Schwingungssituation entweder die Stirnfläche des einen oder des anderen Federelementes an den jeweiligen Lagerbock zur Anlage kommt.

Gemäß einer Weiterbildung der Erfindung können die Zapfen durch - das Fahrerhaus in Querrichtung versteifende - Querstabilisatoren gebildet sein. Bei Versteifung des Fahrerhauses durch andere geeignete Mittel können die Zapfen durch separate Voll- oder Hohlwellen gebildet sein.

Nachfolgend ist die Erfindung anhand eines in der Zeichnung schematisch dargestellten Ausführungsbeispieles näher erläutert.

In der Zeichnung zeigen:
- Fig. 1: eine erste Darstelllung eines vorderen Lagers einer vorderen Fahrerhauslagerung im Horizontalschnitt,
- Fig. 2: ein vorderes und ein hinteres Lager einer vorderen Fahrerhauslagerung gemäß Fig. 1 in Draufsicht und
- Fig. 3: ein vorderes und ein hinteres Lager einer vorderen Fahrerhauslagerung gemäß Fig. 1 in Seitenansicht.

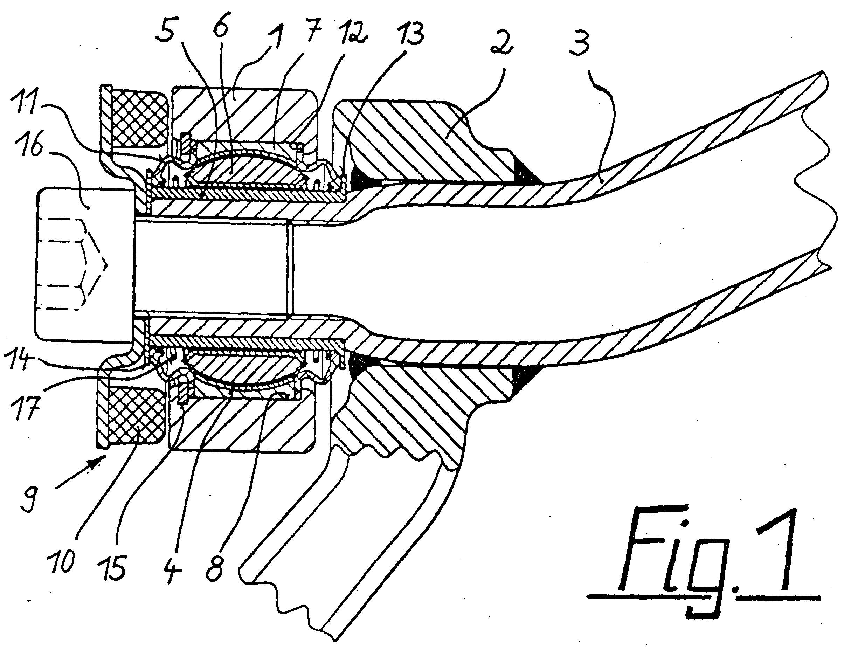

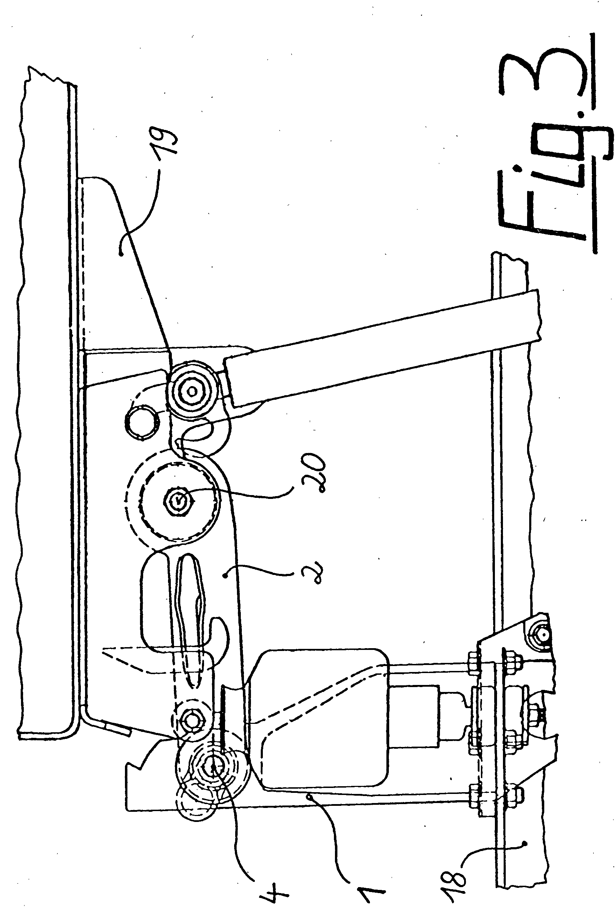

In Fig. 1 ist ein vorderes Lager 4 einer vorderen Lagerung für das kippbare Fahrerhaus eines Frontlenker-Lastkraftwagens im Horizontalschnitt dargestellt. Das vordere Lager 4 ist innerhalb eines Lagerbockes 1 angeordnet, der - wie in Fig. 3 gezeigt - fest mit einem Fahrzeugrahmen 18 verbunden ist.

Gemäß Fig. 3 ist das Fahrerhaus untersetig mit einer fest an diesem anmontierten Fahrerhauskonsole 19 versehen und über eine mittels einem hinteren Lager 20 gelagerten Schwinge 2 schwenkbar an dem vorderen Lager 4 angebunden. Um dieses vordere Lager 4 ist das Fahrerhaus gegenüber dem Fahrzeugrahmen 18 schwenkbar. In der hier gezeigten Version bilden das im rahmenfesten Lagerbock 1 untergebrachte, vordere Lager 4 und das an der Fahrerhauskonsole 19 angeordnete Lager 20 zusammen die vordere Lagerung 4, 20 des kippbaren Fahrerhauses. Alternativ kann bei einfacherer Lagerung des Fahrerhauses diese Lagerung durch ein Paar vorderer Lager gebildet sein. In vereinfachender Weise ist in der Zeichnung auf eine spiegelbildliche Darstellung der an sich paarweise vorgesehenen Bauteile wie Schwinge, Lagerbock und Lager verzichtet.

Die in Fig. 1 gezeigte Schwinge 2 ist zur Seite des Lagerbockes 1 hin, fest mit einem von dieser abragenden Zapfen 3 verbunden. Dieser ist hier durch einen - das Fahrerhaus in Querrichtung versteifenden - Querstabilisator gebildet und mittels zweier Rundschweißnähte fest mit der Schwinge 2 verbunden. Der durch die Verlängerung des Querstabilisators gebildete Zapfen 3 ist axial verschiebbar in dem hier als Gelenklager ausgebildeten vorderen Lager 4 gelagert. Dabei ist auf dem Zapfen 3 eine Gleitbuchse 5 befestigt, die innerhalb eines Lagerinnenringes 6 mit einer Gleitschicht axial verschiebbar ist. Ein entsprechender Lageraußenring 7 ist innerhalb einer lagerbockinternen Nut 8 axial fixiert. Durch diese axiale Verschiebbarkeit der Gleitbuchse 5 im Gelenklager 4 ist das Fahrerhaus in Bezug auf die Fahrzeuglängsachse querschwingungsmäßig entkoppelbar. Die axiale Verschiebbarkeit der Gleitbuchse 5 im Gelenklager 4 ist durch ein Federelement 9 begrenzt, das an den die Gleitbuchse 5 tragenden Zapfen 3 befestigt ist.

Das Federelement 9 ist endseitig des Zapfens 3 zu der Stirnseite des Lagerbockes 1 hin abstützbar angeordnet und fest mittels einer Verschraubung 16 mit dem Zapfen 3 verbunden. Das Federelement 9 ist tellerförmig ausgebildet und weist lagerbockseitig Dämpfungselemente 10 in Gestalt eines ringförmigen Gummipuffers oder dergleichen auf. Nach einer anderen, hier nicht gezeigten Version können anstelle der vorderen Lager auch die hinteren Lager der Lagerung des Fahrerhauses eine entsprechende Axialverschiebbarkeit aufweisen. In weiterer Alternative können auch vordere und hintere Lager gleichermaßen eine aufeinander entsprechend abgestimmte Axialverschiebbarkeit aufweisen.

An dem Gelenklager 4 sind stirnseitig Abdichtungen 11 vorgesehen, die hier durch balgähnliche Dichtelemente gebildet sind. Die Dichtelemente 11 sind einenendes zwischen den Lageraußenringen 7 und lagerbockfesten Schultern 12 und anderenendes zwischen Lagerinnenringen 8 und gleitbuchsenfesten Schultern 13 gefaßt. In der hier gezeigten Version sind die lagerbockfesten Schultern 12 durch die Flanken der lagerbockinternen Nut 8 gebildet. Die gleitbuchsenfesten Schultern 13, 14 sind durch stirnendseitig der Gleitbuchse 5 angeordnete Stege gebildet. Der zur Seite der Schwinge 2 hin angeordnete Steg 13 der Gleitbuchse 5 ist einstückig mit dieser verbunden. Der zur Seite des Federelementes 9 hin angeordnete Steg 14 der Gleitbuchse 5 ist durch eine zwischen Federelement 9 und Gleitbuchse 5 einlegbare Scheibe gebildet.

Ein zur Montage des Gelenklagers 4 im Lagerbock 1 vorgesehener Einlegering 15 ist einenendes des Lageraußenringes 7 stirnseitig zwischen diesem und einer Flanke der lagerbockinternen Nut 8 angeordnet. Nach einer anderen, hier nicht gezeigten Version können die Abdichtungen für die Lager und deren Befestigung auch durch andere, hierfür geeignete Mittel gebildet sein.

Die Schwinge 2 ist mittels am Umfang des Zapfens 3 angeordneter Schweißnähte fest mit dem Zapfen 3 des Querstabilisators verbunden. In der hier gezeigten Version ist der zugleich den Zapfen 3 bildende Querstabilisator im Hohlquerschnitt ausgebildet, was den Vorteil einer Gewichtsersparnis hat. An dem Querstabilisator ist im Bereich der Schweißnähte eine entsprechend gestaltete Einziehung vorgesehen, die gleichzeitig eine Schweißphase für die Schweißnähte bildet. Damit kann die Montage vereinfacht und die Fertigungskosten gesenkt werden. Da insgesamt zwei Schweißnähte je Schwinge 2 vorgesehen sind, kann hier gegenüber einem Querstabilisator mit Vollquerschnitt ein insgesamt größerer Schweißnahtquerschnitt erzielt werden. Dadurch ist eine höhere Stabilität der Verbindung von Querstabilisator und Schwinge 2 ermöglicht. Den Dichtelementen 11 sind zusätzlich Druckfedern 17 zugeordnet. Diese stützen sich einenendes an den Lagerinnenringen 6 und anderenendes innenseitig über die Dichtelemente 11 an den Stegen 13, 14 der Gleitbuchsen 5 ab.

Durch die Druckfedern 17 sind die Dichtelemente 11 in ihrem Dichtbereich axial an die jeweiligen Schultern 13, 14 angepreßt, so daß bei den auftretenden Axialbewegungen zwischen Gelenklager 4 und Gleitbuchse 5 ein Abheben der Dichtkanten wirksam unterbunden ist. Die Druckfedern 17 sind so ausgelegt, daß sie einerseits durch ihre lineare Kennlinie eine stets genügend große Anpreßkraft und andererseits bei weiterer Verformung eine nicht zu hohe Beeinflussung der axialen Bewegung der Gleitbuchse und damit des Zapfens 3 des Querstabilisators im Gelenklager 4 gewährleisten.

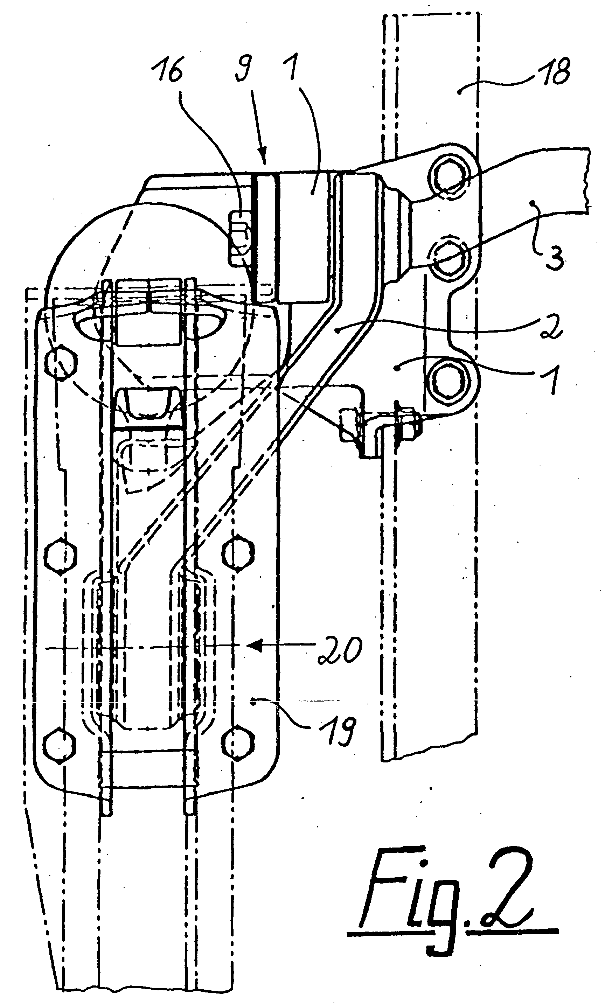

Fig. 2 zeigt in Draufsicht die um das vordere Lager 4 gegenüber dem Fahrzeugrahmen 18 schwenkbare, mit dem Fahrerhaus fest verbundene Fahrerhauskonsole 19. Diese ist über die Schwinge 2 mit dem am Fahrzeugrahmen 18 befestigten Lagerbock 1 schwenkbar angebunden. Innerhalb des Lagerbockes 1 ist das vordere, die Schwinge 2 rahmenseitig lagernde Lager 4 angeordnet, das hier als Gelenklager realisiert ist. Das die Schwinge 2 fahrerhausseitig lagernde, hintere Lager 20 ist hier als Gummilager realisiert. Das vordere Gelenklager ist über einen hier nicht gezeigten Lagerinnenring mit dem Zapfen 3, der hier einstückig mit dem Querstabilisator gebildet ist, verbunden. Der Zapfen 3 ist axial verschiebbar im Gelenklager 4 gelagert und zugleich kraftschlüssig über Schweißnähte mit der Schwinge 2 verbunden. Die kraftschlüssige Verbindung von Schwinge 2 und Zapfen 3 kann aber auch durch andere hierfür geeignete Mittel gegeben sein. Die axiale Beweglichkeit des Zapfens 3 ist durch das endseitig an diesem mittels Verschraubung 16 befestigte Federelement 9 begrenzt.

## Patentansprüche

1. Vordere Lagerung für ein um deren rahmenfeste vordere Lager (4) schwenkbares Fahrerhaus eines Frontlenker-Lastkraftwagens, wobei das Fahrerhaus in Bezug auf eine Fahrzeuglängsachse querschwingungsmäßig von einem Fahrzeugrahmen (18) durch im Bereich der vorderen Lagerung (4, 20) angeordnete Organe mit begrenzter Querbeweglichkeit entkoppelbar ist, dadurch gekennzeichnet, daß in den vorderen Lagern (4) einer vorderen Lagerung (4, 20) drehbare und axial verschiebbare Zapfen (3) gelagert sind, die mit dem Fährerhaus entweder unmittelbar oder mittelbar über hieran angelenkte Schwingen (2) verbunden sind, wobei die axiale Verschiebbarkeit der Zapfen (3) in den vorderen Lagern (4) durch'endseitig der Zapfen (3) befestigte und zu den Stirnseiten der Lagerböcke (1) hin abstützbar angeordnete Federelemente (9) begrenzt ist.

2. Vordere Lagerung für ein um deren rahmenfeste vordere Lager (4) schwenkbares Fahrerhaus eines Frontlenker-Lastkraftwagens, wobei das Fahrerhaus in Bezug auf eine Fahrzeuglängsachse querschwingungsmäßig von einem Fahrzeugrahmen (18) durch im Bereich der vorderen Lagerung (4, 20) angeordnete Organe begrenzter Querbeweglichkeit entkoppelbar ist, dadurch gekennzeichnet, daß in hinteren Lagern (20) einer vorderen Lagerung (4, 20) drehbare und axial verschiebbare Zapfen gelagert sind, die mit dem Fahrerhaus entweder unmittelbar oder mittelbar über hieran angelenkte Schwingen (2) verbunden sind, wobei die axiale Verschiebbarkeit der Zapfen in den hinteren Lagern (20) durch endseitig der Zapfen befestigte und zu den Stirnseiten der Schwingen (2) oder den Stirnseiten einer mit dem Fahrerhaus fest verbundenen Fahrerhauskonsole (19) hin abstützbar angeordnete Federelemente (9) begrenzt ist.

3. Lagerung nach Anspruch 1, dadurch gekennzeichnet, daß die vorderen Lager (4) mit ihren Lageraußenringen (7) innerhalb lagerbockinterner Nuten (8) axial fixiert und mit ihren Lagerinnenringen (6) axial verschiebbar auf fest auf den Zapfen (3) aufsitzenden Gleitbuchsen (5) angeordnet sind.

4. Lagerung nach Anspruch 3, dadurch gekennzeichnet, daß an den vorderen Lagern (4) stirnseitig Abdichtungen (11) vorgesehen sind, und daß die Abdichtungen (11) balgähnliche Dichtelemente sind, die einenendes zwischen den Lageraußenringen (7) und lagerbockfesten Schultern (12) und anderenendes zwischen Lagerinnenringen (6) und gleitbuchsenfesten Schultern (13, 14) gefaßt sind, und daß die lagerbockfesten Schultern (12) durch die Flanken der lagerbockinternen Nuten (8) und die gleitbuchsenfesten Schultern (13, 14) durch stirnendseitig der Gleitbuchsen (5) angeordnete Stege (13, 14) gebildet sind.

5. Lagerung nach Anspruch 2, dadurch gekennzeichnet, daß die hinteren Lager (20) mit ihren Lageraußenringen innerhalb der Schwingen (2) oder innerhalb der Fahrerhauskonsole (19) angeordneter Nuten axial fixiert und mit ihren Lagerinnenringen axial verschiebbar auf fest auf den Zapfen aufsitzenden Gleitbuchsen angeordnet sind.

6. Lagerung nach Anspruch 5, dadurch gekennzeichnet, daß an den hinteren Lagern (20) stirnseitig Abdichtungen (11) vorgesehen sind, und daß die Abdichtungen (11) balgähnliche Dichtelemente sind, die einenendes zwischen den Lageraußenringen und schwingen- oder konsolenfesten Schultern und anderenendes zwischen Lagerinnenringen und gleitbuchsenfesten Schultern gefaßt sind, und daß die schwingen- oder konsolenfesten Schultern durch die Flanken der schwingen- oder konsoleninternen Nuten und die gleitbuchsenfesten Schultern durch stirnendseitig der Gleitbuchsen angeordnete Stege gebildet sind.

7. Lagerung nach einem der Ansprüche 4 und 6, dadurch gekennzeichnet, daß den Dichtelementen (11) zusätzlich Druckfedern (17) zugeordnet sind, die sich einenendes an den Lagerinnenringen (6) und anderenendes über die Dichtelemente (11) an den Stegen (13, 14) abstützen.

8. Lagerung nach einem der vorangegangenen Ansprüche 1 bis 7, dadurch gekennzeichnet, daß die Federelemente (9) tellerförmig ausgebildet sind und abstützseitig Dämpfungselemente (10) aufweisen.

9. Lagerung nach einem der vorangegangenen Ansprüche 1 bis 7, dadurch gekennzeichnet, daß die Zapfen (3) durch - das Fahrerhaus in Querrichtung versteifende - Querstabilisatoren gebildet sind.

## Claims

1. Front suspension system for a cab of a forward-control truck, which cab can be turned about the suspension system's front bearings (4) firmly attached to the frame, whereby the cab, in relation to the vehicle's longitudinal axis, can, with regard to transverse vibrations, be decoupled from a vehicle frame (18) by means of organs with limited transverse mobility which are arranged in the area of the front suspension system (4, 20), characterised in that slewable and axially shiftable pins (3) are supported in the front bearings (4) of a front suspension system (4, 20) and connected with the cab either directly on indirectly via rockers (2) linked to said cab, the axial shiftability of the pins (3) in the front bearings (4) being limited by spring elements (9) fitted to the end faces of the pins (3) and arranged so that they can be supported towards the front faces of the bearing blocks (1).

2. Front suspension system for a cab of a forward-control truck, which cab can be turned about the suspension system's front bearings (4) firmly attached to the frame, whereby the cab, in relation to the vehicle's longitudinal axis, can, with regard to transverse vibrations, be decoupled from a vehicle frame (18) by means of organs with limited transverse mobility which are arranged in the area of the front suspension system (4, 20), characterised in that slewable and axially shiftable pins are supported in the rear bearings (20) of a front suspension system (4, 20) and connected with the cab either directly or indirectly via rockers (2) linked to said cab, the axial shiftability of the pins in the rear bearings (20) being limited by spring elements (9) fitted to the end faces of the pins and arranged so that they can be supported towards the front faces of the rockers (2) or towards the front faces of a cab console (19) firmly connected with the cab.

3. Suspension system according to Claim 1, characterised in that the bearing outer rings (7) of the front bearings (4) are axially fixed within bearing-block-internal grooves (8) and that the bearing inner rings (6) are axially shiftable on sliding bushes (5) firmly sitting on the pins (3).

4. Suspension system according to Claim 3, characterised in that the front faces of the front bearings (4) are provided with seals (11) and that these seals (11) are bellows-type sealing elements whose one end is held between the bearing outer rings (7) and shoulders (12) fitted to the bearing blocks and whose other end is held between bearing inner rings (6) and shoulders (13, 14) firmly fitted to the sliding bushes, and that the shoulders (12) fitted to the bearing blocks are formed by the flanks of the bearing-block-internal grooves (8) and the shoulders (13, 14) fitted to the sliding bushes are formed by webs (13, 14) arranged on the front faces of the sliding bushes (5).

5. Suspension system according to Claim 2, characterised in that the bearing outer rings of the rear bearings (20) are axially fixed in grooves arranged within the rockers (2) or within the cab console (19) and that the bearing inner rings are, in an axially shiftable manner, arranged on sliding bushes firmly sitting on the pins.

6. Suspension system according to Claim 5, characterised in that the front faces of the rear bearings (20) are provided with seals (11) and that these seals (11) are bellows-type sealing elements whose one end is held between the bearing outer rings and shoulders fitted to rockers or consoles and whose other end is held between bearing inner rings and shoulders fitted to sliding bushes, and that the shoulders fitted to the rockers or consoles are formed by the flanks of the rocker- or console-internal grooves and the shoulders fitted to the sliding bushes are formed by webs arranged on the front faces of the sliding bushes.

7. Suspension system according to one of the Claims 4 and 6, characterised in that pressure springs (17), one end of which is supported on the bearing inner rings (6) and the other end of which is supported on the webs (13, 14) via the sealing elements (11), are additionally allocated to the sealing elements (11).

8. Suspension system according to one of the aforementioned Claims 1 to 7, characterised in that the spring elements (9) are designed as discs and show damping elements (10) on the support side.

9. Suspension system according to one of the aforementioned Claims 1 to 7, characterised in that the pins (3) are formed by transverse stabilisers stiffening the cab in transverse direction.

## Revendications

1. Dispositif de paliers avant pour une cabine de camion à cabine avancée basculant autour de paliers avant (4) solidaires du châssis, la cabine pouvant être par rapport à l'axe longitudinal du véhicule découplée vis-à-vis des oscillations transversales du châssis (18), par des organes à mobilité transversale limitée, prévus au niveau du dispositif de paliers avant (4, 20),
caractérisé en ce que
- les paliers avant (4) d'un dispositif de paliers avant (4, 20) logent des pivots (3) mobiles en rotation et coulissant axialement, ces pivots étant reliés à la cabine soit directement, soit indirectement par des bras (2) articulés à celle-ci,
- la possibilité de coulissement axial des pivots (3) dans les paliers avant (4) étant limitée par des éléments élastiques (9) prévus à l'extrémité des pivots (3) et qui s'appuient contre les blocs de paliers (1) par leur face frontale.

2. Dispositif de paliers avant pour une cabine de camion à cabine avancée basculant autour de paliers avant (4) solidaires du châssis, la cabine pouvant être découplée des oscillations transversales du châssis (18) vis-à-vis de l'axe longitudinal du véhicule, par des organes à mobilité transversale limitée, prévus au niveau du dispositif de paliers avant (4, 20),
caractérisé en ce que
- les paliers arrière (20) comportent des pivots tournant et coulissant axialement dans un dispositif de paliers avant (4, 20), ces pivots étant reliés directement ou indirectement à la cabine par l'intermédiaire de bras (2) articulés à celle-ci,
- la possibilité de coulissement axial des pivots dans les paliers arrière (20) étant limitée par des éléments élastiques (9) fixés en extrémité des pivots, et montés de façon à pouvoir s'appuyer du côté des faces frontales des bras (2) ou des faces frontales d'une console (19) de cabine reliée solidairement à la cabine.

3. Dispositif de paliers selon la revendication 1,
caractérisé en ce que
les paliers avant (4) sont fixés axialement par leurs bagues extérieures (7) à l'intérieur de rainures (8) internes aux blocs de paliers, et de manière coulissante axialement par leurs bagues intérieures (6) sur des coussinets (5) solidaires des pivots (3).

4. Dispositif de paliers selon la revendication 3,
caractérisé en ce que
- les paliers avant (4) sont munis sur leur face frontale de moyens d'étanchéité (11) et
- ces moyens d'étanchéité (11) sont des éléments en forme de soufflets dont une extrémité est prise entre les bagues extérieures de palier (7) et des épaulements (12) solidaires des blocs de paliers, et dont l'autre extrémité est prise entre les bagues intérieures de palier (6) et les épaulements de coussinets (13, 14), et
- les épaulements de bloc de palier (12) sont formés par les flancs de rainures (8) internes aux blocs de paliers et les épaulements (13, 14) solidaires du coussinet sont formés par des rebords (13, 14) prévus sur la face frontale des coussinets (5).

5. Dispositif selon la revendication 2,
caractérisé en ce que
les paliers arrière (20) sont fixés axialement par leurs bagues extérieures dans les bras (2) ou dans des rainures prévues dans la console (19) de la cabine, et sont montés coulissant axialement avec leurs bagues de paliers, sur des coussinets fixes rapportés sur les pivots.

6. Dispositif selon la revendication 5,
caractérisé en ce que
- les faces frontales des paliers arrière (20) comportent des moyens d'étanchéité (11) et ces moyens d'étanchéité (11) sont des éléments d'étanchéité en forme de soufflets dont une extrémité est prise entre les bagues extérieures de paliers et des épaulements solidaires des bras ou des consoles, et dont leur autre extrémité este prise entre les bagues intérieures de paliers et des épaulements solidaires des coussinets, et
- les épaulements solidaires des bras ou des consoles sont formés par les flancs de rainures internes aux bras ou aux consoles et les épaulements solidaires des coussinets sont formés par des rebords prévus en extrémité frontale des coussinets.

7. Dispositif selon l'une des revendications 4 et 6,
caractérisé en ce que
les éléments d'étanchéité (11) comportent en outre des ressorts de compression (17) s'appuyant par une extrémité contre les bagues intérieures (6) des paliers et par l'autre extrémité contre les rebords (13, 14) par l'intermédiaire des éléments d'étanchéité (11).

8. Dispositif selon l'une quelconque des revendications 1 à 7,
caractérisé en ce que
les éléments de ressort (9) sont en forme de coupelles et comportent des éléments amortisseurs (10) sur leur côté d'appui.

9. Dispositif selon l'une quelconque des revendications précédentes 1 à 7,
caractérisé en ce que
les pivots (3) sont formés par des stabilisateurs transversaux rigidifiant la cabine dans la direction transversale.
